# EUROPÄISCHE PATENTSCHRIFT

(11) **EP 0 500 595 B1**
(45) Veröffentlichungstag und Bekanntmachung des Hinweises auf die Patenterteilung: **02.08.1995**
(21) Anmeldenummer: 90915997.2
(22) Anmeldetag: 08.11.1990
(51) Int. Cl.: H04N 11/16, H04N 9/77

(54) **VERFAHREN ZUM ÜBERTRAGEN EINES FARBFERNSEHSIGNALS**
PROCESS FOR TRANSMITTING A COLOUR TELEVISION SIGNAL
PROCEDE DE TRANSMISSION D'UN SIGNAL DE TELEVISION COULEUR

(30) Priorität: 17.11.1989 DE 3938242
(43) Veröffentlichungstag der Anmeldung: 02.09.1992
(73) Patentinhaber: Thomson Consumer Electronics Sales GmbH, 30453 Hannover (DE)
(72) Erfinder: EBNER, Andreas, D-8080 Fürstenfeldbruck (DE)
(86) Internationale Anmeldenummer: EP9001862
(87) Internationale Veröffentlichungsnummer: WO9107852

(56) Entgegenhaltungen:
- US-A- 3 730 984
- US-A- 3 972 065
- Rundfunktechnische Mitteilungen, Band 29, Nr. 1, January-February 1985, (Noderstedt, DE) G. Holoch et al.: "I-Pal - eine übersprechfreie kompatible Systemvariante mit verbesserter Horizontalauflösung für das Leuchtdichte-signal", Seiten 9-14

## Beschreibung

Die Erfindung bezieht sich auf ein Verfahren gemäß dem Oberbegriff des Patentanspruchs 1. Ein derartiges Verfahren ist aus der DE-C- 33 38 192 bekannt.

Zur Verringerung des Übersprechens von hochfrequenten leuchtdichten Signalspektren in die damit verkämmten Farbsignalspektren beim PAL-Farbfernsehsystem ist ein als Improved- bzw. I-PAL bezeichnetes Verfahren bekannt (DE-C- 33 38 192), bei dem in einer ersten Fernsehzeile nur ein breitbandiges Leuchtdichtesignal und in der darauffolgenden zweiten Fernsehzeile ein schmalbandiges Leuchtdichtesignal sowie - frequenzmäßig davon getrennt - ein modulierter Farbträger übertragen werden. Auf diese Weise wird bei voller Kompatibiliät zu vorhandenen Fernsehempfängern eine Verkämmung von hochfrequenten Leuchtdichte- und Farbsignalspektren vermieden. Da das Farbsignal nur in jeder zweiten Fernsehzeile übertragen wird, muß für jede erste Fernsehzeile das Farbsignal im Empfänger wiederholt werden. Allerdings geht dabei der PAL-spezifische Vorteil des zeilenweise umgeschalteten Farbträgers und die daraus resultierende Unempfindlichkeit gegen Phasenfehler des Farbsignals verloren.

Zur Verringerung der Phasenempfindlichkeit des I-PAL-Systems ist eine Modifizierung (I-PAL-M) vorgeschlagen worden, bei welcher in jeder ersten Fernsehzeile das breitbandige Leuchtdichtesignal zusammen mit einem damit spektral verkämmten, modulierten Farbträger übertragen wird, wie dies der PAL-Norm entspricht. Derselbe modulierte Farbträger wird dann in der darauffolgenden zweiten Zeile übertragen, so daß es im Empfänger möglich ist, durch einfache Subtraktion des aus der zweiten Zeile störungsfrei separierbaren, modulierten Farbträgers von dem Frequenzgemisch der ersten Zeile das breitbandige Leuchtdichtesignal der erste Zeile störungsfrei zu gewinnen. Da das I-PAL-M-System in jeder Zeile einen modulierten Farbträger aufweist, dessen Phasenlage der PAL-Schaltphase entspricht, bleibt die Phasenunempfindlichkeit des PAL-Systems erhalten.

Die störungsfreie Gewinnung des breitbandigen Leuchtdichte Signals der ersten Zeile setzt bei dem I-PAL-M-System voraus, daß die Phasenlage des aus der zweiten Zeile separierten, modulierten Farbträgers exakt übereinstimmt mit. der Phasenlage des mit dem Leuchtdichtesignal verkämmten, modulierten Farbträgers der ersten Zeile. Hierzu wird der aus der zweiten Zeile separierte, modulierte Farbträger (welcher um die PAL-Schaltphase gegenüber dem modulierten Farbträger der ersten Zeile versetzt ist) in seiner Phasenlage verschoben, wobei als Phasenreferenz ein aus dem Farbsynchronsignal (Burst) des Synchronrahmens regenerierter Farbträger dient. Falls jedoch die Phasenlage des regenerierten Farbträgers nicht mit der Phasenlage des modulierten Farbträgers der ersten Zeile übereinstimmt, ergibt sich ein Phasenfehler zwischen den zu subtrahierenden, modulierten Farbträgern, was zu Farbsignalresten im breitbandigen Leuchtdichte Signal führt. Dieser Fall stellt sich insbesondere ein, wenn bei der Aufzeichnung der ursprüngliche, von der Bildgenerierung stammende Synchronrahmen nicht benutzt, sondern durch einen MAZ-seitigen Synchronrahmen ersetzt wird, wodurch die ursprünglich exakte Phasenbeziehung zwischen dem Farbsynchronsignal und den modulierten Farbträgern verloren geht.Um derartige Phasenfehler zu vermeiden, geht ein Vorschlag dahin, bei dem I-PAL-M-System dem gesamten Bildsignal einen Farbträger geringer Amplitude zu überlagern. Dem Nachteil der dadurch verursachten Bildstörungen steht der Vorteil gegenüber, daß der überlagerte Farbträger - anders als das Farbsynchronsignal des Synchronrahmens - mit dem Bildsignal auch bei späterer Bearbeitung fest verkoppelt bleibt.

Die Aufgabe der Erfindung besteht darin, bei einem Verfahren der eingangs erwähnten Art, insbesondere entsprechend dem I-PAL-M-System Phasenfehler ohne Inkaufnahme von Bildstörungen zu vermeiden.

Diese Aufgabe wird erfindungsgemäß durch die Merkmale des Patentanspruchs 1 gelöst.

Vorteilhafte Ausgestaltungen und Weiterbildungen das erfindungsgemäßen Verfahrens ergeben sich aus den abhängigen Ansprüchen.

Die Erfindung wird anhand der in den Zeichnungen dargestellten Ausführungsbeispielen näher erläutert.

Es zeigt:
- Fig.1: Referenzsignal
- Fig.2: Blockschaltbild zur Feststellung der Phasendifferenz zwischen regenerierten Farbträger und modulierten Farbträger und zur Phasenkorrektur des Farbträgers.
- Fig.3: Blockschaltbild, welches die vereinfachte Struktur des I-PAL-M-Systems wiedergibt.
- Fig.4: Blockschaltbild zur Anwendung des Verfahrens auf andere Fernsehsysteme.

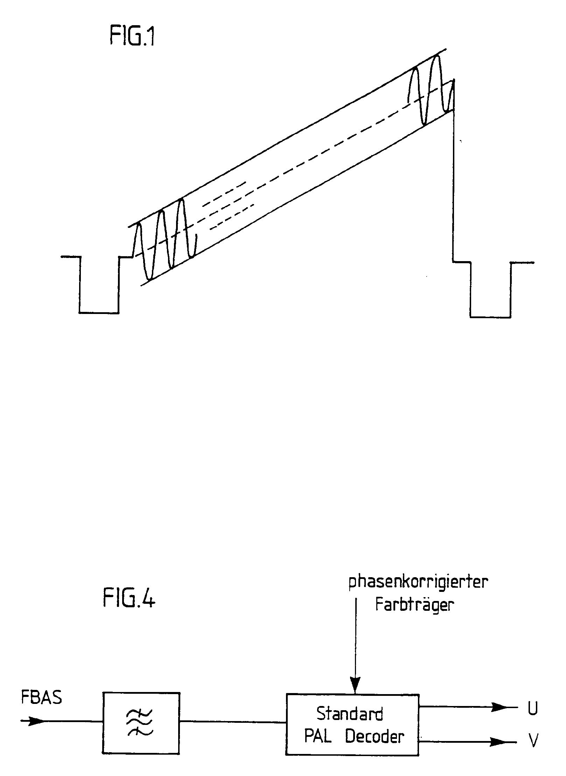

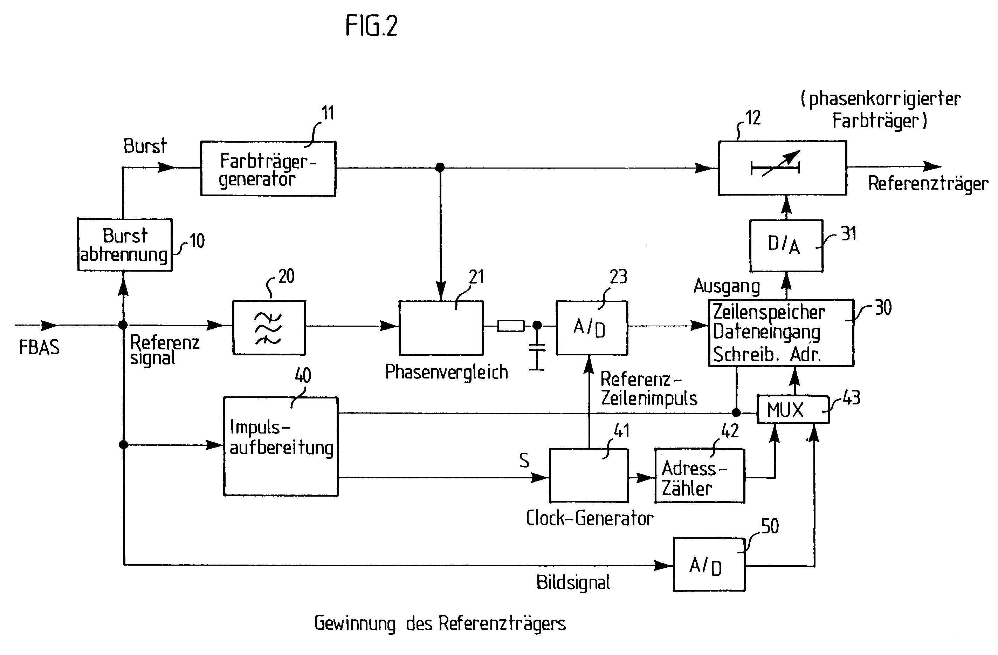

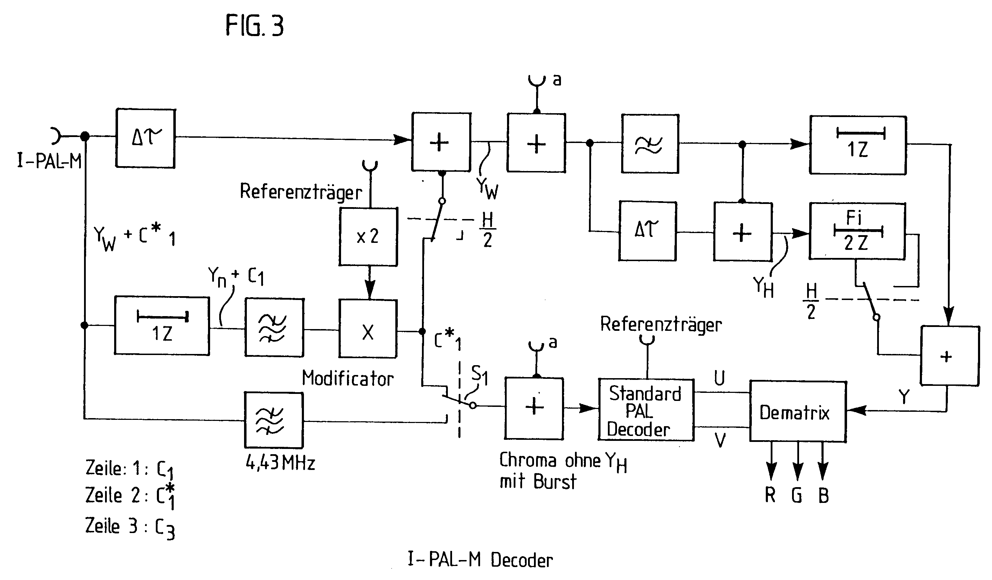

Um eine, durch das Bildsignal ungestörte Information über die Farbträgerphase zu erhalten, bietet sich die Möglichkeit das Bildsignal eines Farbfernsehlsignals mit einem Referenzsignal nach Fig.1 zu verkoppeln. Dieses Signal besteht aus einem Signal mit kontinuierlich ansteigender Amplitude, welches mit dem Farbträger des Coders zu modulieren ist. Dieses Signal wird am Bildanfang platziert. Dieses Referenzsignal muß fest verbunden mit dem Bildsignal übertragen und identisch mit dem Bildsignal behandelt werden. Ist dies der Fall, so beinhaltet das Referenzsignal die selben amplitudenabhängigen Fehler, die z.B. bei einer MAZ-Wiedergabe oder Übertragung auftreten können, wie das Bildsignal. Findet im Empfänger eine Auswertung des Referenzsignals statt, so können durch eine geeignete Schaltung, Phasenfehler zwischen Burst und modulierten Farbträger und amplitudenabhängige Phasenfehler (differentielle Phase) ermittelt werden. Da wie bereits gefordert das Referenzsignal mit dem Bildsignal gekoppelt sein muß, enthält das Bildsignal die selben ermittelten Fehler. Eine Aussage über das Referenzsignal ist damit für das gesamte Bild gültig. Fig.2 zeigt in einem Blockschaltbild ein geeignetes Verfahren zur Auswertung des Referenzsignals und damit zur Ermittlung des Phasenfehlers. Hierbei wird in einem Phasenvergleicher 21 die Differenz zwischen dem, durch den Burst generierten Farbträger 11 und dem im Referenzsignal enthaltenen, von der überlagerten, kontinuierlich ansteigenden Gleichspannung befreiten Farbträger 20 ermittelt und in eine Regelspannung umgesetzt. Durch diese Art des Vergleichs ist der ursprünglich amplitudenabhängige Phasenfehler in einen zeitlich abhängigen transformiert worden. Da dieses Fehlersignal für das gesamte Bildsignal gültig ist, wird es nach einer A/D-Wandlung 23 in einem Speicher 30 abgelegt. Dieser Speicher 30 wird für die Dauer der Referenzzeile 40 in den Schreibmodus gebracht und seine Adressierung von einem Adresszähler 42 abgeleitet, der von einem, mit dem Synchronsignal verkoppelten Clockgenerator 41 gesteuert wird. Somit werden z.B. die Phasenfehler für niedrige Amplitudenwerte in Speicherzellen mit niedriger Adresse abgelegt. Um ein Signal zur Korrektur des, aus dem Burst generierten Farbträgers zu erhalten, muß der Speicher entsprechend dem Blockschaltblid in Fig.2 adressiert werden. Hierzu wird die Amplitude des Bildsignals mittels eines A/D-Wandlers 50 in ein digitales Signal überführt. Dies wird, wenn nicht die Referenzzeile auftritt als Adresssignal, durch einen Multiplexer 43 geschaltet und für die Speicheradressierung verwendet. Durch die Verwendung der Bildsignalamplitude als Speicheradresse wird das ursprunglich im Speicher abgelegte zeitabhängige Korrektursignal wieder in ein amplitudenabhängiges Signal überführt. Am Speicherausgang steht somit ein Signal zur Korrektur der Farbträgerphase zur Verfügung, das den Phasenfehler, abhängig von der Signalamplitude beinhaltet. Mittels dieses Korrektursignals kann über eine variable Laufzeitkette die Phasenlage des Farbträgers korrigert werden.
Dieses phasenkorrigierte Farbträgersignal kann zur Rekonstruktion des modulierten Chrominanzsigals C*1, das in der Zeile mit der breitbandigen Luminanz übertragen wird, aus dem modulierten Chrominanzsignal C1, das in der Zeile mit der schmalbandigen Luminanz übertrgen wird, verwendet werden, gezeigt in Fig.3. Diese Rekonstruktion erfolgt mittels dem Modifikator, der mit der doppelten Farbträgerfrequenz arbeitet. Mit dem Schalter S1 kann nun von der Grundstellung, Durchlaß von C1 inklusive Burst, mit dem Impuls BA/2 (halbe Bildaustastfrequenz) auf C*1 umgesschaltet werden. Der Standard-PAL-Decoder erhält damit ein moduliertes Chrominanzsignal aus dem I-PAL-M-System, das dem eines PAL-Systems identisch ist. Somit können Phasenfehler beseitigt werden, sie gehen jedoch in einen Sättigungsfehler der Chrominanz über. Fig.4 zeigt nun eine vorteilhaften Betrieb des Standard-PAL-Decoders. Hierbei wird zusätzlich der phasenkorrigierte Farbträger zur Demodulation des modulierten Chrominanzsignals verwendet. Der Vorteil, der sich daraus ergibt, ist ein demoduliertes Chrominanzsignal, frei von Farbton-, Farbsättigungsfehlern und Quadraturverzerrungen.
Eine andere Methode um ein Korrektursignal für die Phase des Farbträgers zu erhalten wäre, den Farbträger aus dem modulierten Chrominanzsignal zu gewinnen, ihn in der Phase mit dem generierten Farbträger zu vergleichen und das so gewonnene Signal direkt zur Phasenkorrektur zu benutzen.

## Patentansprüche

1. Verfahren zum Übertragen von Farbfernsehsignalen im Zeit- und Frequenzmultiplex, die eine Luminanz-Signalkomponente und einen modulierten Farbträger enthalten, bei dem jeweils eine erste Zeile eines Zeilenpaars das Luminanzsignal mit der vollen Bildsignal-Bandbreite des Übertragungskanals und einen mit dem Luminanzsignal spektral verkämmten, modulierten Farbträger enthält und eine zweite Zeile des Zeilenpaars einen Frequenzmultiplex aus dem in seiner Bandbreite reduzierten Luminanzsignal und dem davon frequenzmäßig getrennten, modulierten Farbträger aus der ersten Zeile des Zeilenpaars enthält, wobei in jeder Zeile zusätzlich ein Farbsynchronsignal (Burst) enthalten ist, **dadurch gekennzeichnet**, daß bei der studioseitigen Bildgenerierung in wenigstens einer Zeile jedes Vollbildes am Bildanfang außerhalb der vertikalen Austastlücke ein Referenzsignal eingefügt wird, das mit der Bildinformation des betreffenden Vollbildes während der studioseitigen Bearbeitung und senderseitigen Ausstrahlung bis zur empfangsseitigen Aufbereitung untrennbar verbunden bleibt, und daß dieses Referenzsignal einen in der Amplitude kontinuierlich ansteigenden, rampenförmigen Signalanteil aufweist, dem eine sinusförmige Schwingung mit Frequenz und Phase des Farbträgers überlagert ist.

2. Verfahren nach Anspruch 1, **dadurch gekennzeichnet**, daß empfangsseitig die aus dem Referenzsignal abgetrennte und mit amplitudenabhängigen Übertragungsfehlern behaftete Sinusschwingung (20) mit dem aus der Folge der Farbsynchronsignale regenerierten Farbträger (11) in der Phase verglichen wird (21), wobei der Zeitverlauf von festgestellten, amplitudenabhängigen Phasenabweichungen als Korrektursignal bis zum Auftreten des nächstfolgenden Referenzsignals (30) abgespeichert wird, und daß in Abhängigkeit von der festgestellten Momentanamplitude des Bildsignals der zugehörige Korrektursignalwert ausgelesen und zur Korrektur (12) der Momentanphase des regenerierten Farbträgers verwendet wird.

3. Verfahren nach Anspruch 2, **dadurch gekennzeichnet**, daß zur Demodulation des modulierten Farbträgers der phasenkorrigierte Farbträger verwendet wird.

4. Verfahren zum Übertragen von Farbfernsehsignalen im Zeit- und Frequenzmultiplex, die eine Luminanz-Signalkomponente und einen modulierten Farbträger enthalten, der mit dem Luminanzsignal spektral verkämmt ist, wobei in jeder Zeile zusätzlich ein Farbsynchronsignal (Burst) enthalten ist, **dadurch gekennzeichnet**, daß bei der studioseitigen Bildgenerierung in wenigstens einer Zeile jedes Vollbildes am Bildanfang außerhalb der vertikalen Austastlücke ein Referenzsignal eingefügt wird, das mit der Bildinformation des betreffenden Vollbildes während der studioseitigen Bearbeitung und senderseitigen Ausstrahlung bis zur empfangsseitigen Aufbereitung untrennbar verbunden bleibt, und daß dieses Referenzsignal einen in der Amplitude kontinuierlich ansteigenden, rampenförmigen Signalanteil aufweist, dem eine sinusförmige Schwingung mit Frequenz und Phase des Farbträgers überlagert ist.

## Claims

1. Method for transmitting a color television signal in time division and frequency division multiplex which contains a luminance signal component and a modulated color subcarrier, in which a first like of the line pair contains the luminance signal with the full bandwidth of the transmission channel and the modulated color subcarrier which is spectrally interlaced with it, and a second line of the line pair contains a frequency division multiplex which consists of the luminance signal with reduced bandwidth and the modulated color subcarrier, separated from it by frequency, from first line of the line pair, whereby additionally a color sync signal (burst) is transmitted in every line together **characterized in that** during the studio-side picture generation, in at least one line of each frame, at the start of the picture outside the vertical frame blanking area, a reference signal is inserted and remains inseparably linked with the picture information of the respective frame during the studio side processing and transmitter side broadcasting until the receiver side reprocessing, and that the reference signal in the frame blanking area of the respective line has a ramp form signal component, continuously ascending in amplitude, which is superimposed by a sinusoidal oscillation with the frequency and phase of the color subcarrier.

2. Method according to claim 1, **characterized in that** on the receiver side, the sinusoidal oscillation (20) separated from the reference signal and afflicted with amplitude-dependent transmission errors is compared in phase with the color subcarrier regenerated from the sequence of color sync signals, whereby the time duration of determined amplitude-dependent phase deviations is stored as a correction signal until the appearance of the next following reference signal, and that depending on the determined instantaneous amplitude of the luminance signal the associated correction signal value is read out and used for correcting (12) the instantaneous phase of the regenerated color subcarrier.

3. Method according to claim 2, **characterized in that** the phase-corrected color subcarrier is used for a demodulation of the modulated color subcarrier.

4. Method for transmitting a color television signal in time division and frequency division multiplex which contains a luminance signal component and a modulated color subcarrier, which is spectrally interlaced with the luminance signal, whereby each line contains additionally a color sync signal (burst), **characterized in that** during the studio-side picture generation, in at least one line of each frame, at the start of the picture outside the vertical frame blanking area, a reference signal is inserted and remains inseparably linked with the picture information of the respective frame during the studio side processing and transmitter side broadcasting until the receiver side reprocessing, and that the reference signal in the frame blanking area of the respective line has a ramp form signal component, continuously ascending in amplitude, which is superimposed by a sinusoidal oscillation with the frequency and phase of the color subcarrier.

## Revendications

1. Procédé pour la transmission en multiplexage de temps et de fréquence, de signaux de télévision couleurs qui comporte une composante de signal de luminance et une sous-porteuse couleur modulée, où chaque première ligne d'une paire de lignes contient le signal de luminance à la largeur de bande complète du signal image du canal de transmission, et une sous-porteuse couleur modulée à entrelacement spectral avec ledit signal de luminance, et où la deuxième ligne d'une paire de lignes contient un multiplex de fréquence composé du signal de luminance à largeur de bande réduite et de la sous-porteuse couleur modulée, séparée dudit signal par la fréquence et provenant de la première ligne de la paire de lignes, et où chaque première ligne comporte en outre un signal de synchronisation de couleur (burst) ; procédé caractérisé en ce que, lors de la génération d'images au studio, un signal de référence est ajouté au début de l'image et en dehors de l'intervalle *de* suppression vertical, sur au moins une ligne de chaque trame, ledit signal de référence étant inséparablement lié à l'information d'image de la trame concernée pendant le traitement au studio et l'émission au niveau de l'émetteur, jusqu'au traitement au niveau du récepteur, et caractérise en outre en ce que ledit signal de référence comporte une portion de signal (dont l'amplitude croît de façon continue et en forme de rampe) à laquelle est superposé une oscillation sinusoïdale ayant la fréquence et la phase de ladite sous-porteuse couleur.

2. Procédé selon la revendication 1 caractérisé en ce que, côté récepteur, l'oscillation sinusoïdale (20) extraite du signal de référence et comportant des erreurs de transmission en fonction de l'amplitude, est soumis à une comparaison de phase (21) avec la sous-porteuse couleur (11) régénérée à partir de la giclée de signaux de synchronisation de couleur, l'allure temporelle des différences de phase en fonction de l'amplitude qui ont été déterminées étant alors mémorisées jusqu'à l'apparition du signal de référence suivant (30) pour servir de signal de correction ; procédé caractérisé en outre en ce que, la valeur du signal de correction déterminée en fonction de l'amplitude actuelle du signal image, est extraite de la mémoire et utilisée pour la correction (12) de la phase actuelle de la sous-porteuse couleur régénérée.

3. Procédé selon la revendication 2 caractérisé en ce que la démodulation de la sous-porteuse couleur modulée est effectuée à l'aide de la sous-porteuse couleur corrigée en phase.

4. Procédé pour la transmission de signaux de télévision couleurs en multiplexage de temps et de fréquence, contenant une composante de signal de luminance et une sous-porteuse couleur modulée en entrelacement spectral avec le signal de luminance, où chaque ligne comporte, en plus, un signal de synchronisation de couleur (burst), procédé caractérisé en ce que, lors de la génération d'images au studio, un signal de référence est ajouté au début de l'image et en dehors de l'intervalle *de* suppression vertical, sur au moins une ligne de chaque trame, ledit signal de référence étant inséparablement lié à l'information d'image de la trame concernée pendant le traitement au studio et l'émission au niveau de l'émetteur, jusqu'au traitement au niveau du récepteur, et caractérisé en outre en ce que ledit signal de référence comporte une portion de signal dont l'amplitude croît de façon continue et en forme de rampe, à laquelle est superposée une oscillation sinusoïdale ayant la fréquence et la phase de ladite sous-porteuse couleur.
